Europäisches Patentamt

European Patent Office

Office européen des brevets

(11) Publication number: **0 298 926**
**A1**

# (12) EUROPEAN PATENT APPLICATION

(21) Application number: **88830207.2**

(22) Date of filing: **12.05.88**

(51) Int. Cl.⁴: **A 01 G 27/00**

(30) Priority: **13.05.87 IT 8362687**

(43) Date of publication of application:
**11.01.89 Bulletin 89/02**

(84) Designated Contracting States:
**BE CH DE FR GB LI NL**

(71) Applicant: **SARIGEST S.A.**
**Via Curti, 5**
**CH-6904 Lugano (CH)**

(72) Inventor: **Franzi, Marco**
**Via Cernuschi, 61**
**I-21100 Varese (IT)**

(74) Representative: **Pellegri, Alberto et al**
**c/o Società Italiana Brevetti S.p.A. Via Cavour, 9**
**I-21100 Varese (IT)**

The title of the invention has been amended (Guidelines for Examination in the EPO, A-III, 7.3).

(54) **Flowerpot with self-contained automatic control of humidity conditions therein.**

(57)     A flowerpot (1) for cultivating decorative plants especially in interiors has battery operated electronic means (9, 10, 11, 12) for detecting by means of a humidity sensor (8) placed in the cultivation substrate material contained inside the pot the humidification degree thereof and for indicating it by signaling means, either automatically or upon an impulse given by an operator. According to a preferred embodiment, the pot may also be provided with an irrigation liquid reservoir (13), a preset quantity of which is trasferred to the cultivation substrate material automatically when the humidity sensor detects an insufficient degree of humidification.

FIG. 1

## Description

## FLOWERPOT WITH SELF-CONTAINED AUTOMATIC CONTROL OF HUMUS CONDITIONS THEREIN

The present invention relates to a flowerpot for cultivating decorative plants containing electronic control devices and actuators capable of maintaining a correct humidification of the humus or other substratum material contained inside the pot.

In recurrent interior situations it is often difficult or costly in terms of manpower to provide the necessary care to decorative plants or flowers cultivated in pots, in humus or under hydroponic conditions utilizing suitable inert substratum materials, e.g. gravel, sand, vermiculite, etc.. This may be so in building areas, the access to which is restricted to a limited number of persons for security reasons, or in working places such as offices or in interiors of residences.

An object of the present invention is to provide a flowerpot for cultivating decorative plants, especially in interiors, incorporating means for signaling a necessity of humidification of the cultivation substrate easily and at once upon request or automatically.

A further objective of the present invention is to provide a flowerpot self-containing an irrigation liquid reservoir and electronic devices for measuring the humidity degree of the cultivation substrate, and for automatically actuating the transfer of a preset quantity of irrigation liquid from the reservoir to the cultivation substrate.

These objectives and other advantages are achieved by means of the flowerpot object of the present invention as recited in the annexed claims.

The variuos aspects and advantages of the flowerpot object of the present invention will be more easily illustrated through the following description of several preferred embodiments of the invention and by reference to the annexed drawing, wherein:

Figure 1 is a schematic view of a flowerpot made in accordance with the present invention;

Figure 2 is a simplified block diagram of the control devices contained in the flowerpot of Fig. 1;

Figure 3 shows another embodiment of the flowerpot of the invention, incorporating an irrigation liquid reservoir monolithically integrated with the pot itself; and

Figure 4 is a simplified block diagram of the control devices and actuating means incorporated in the flower pot of Fig. 3.

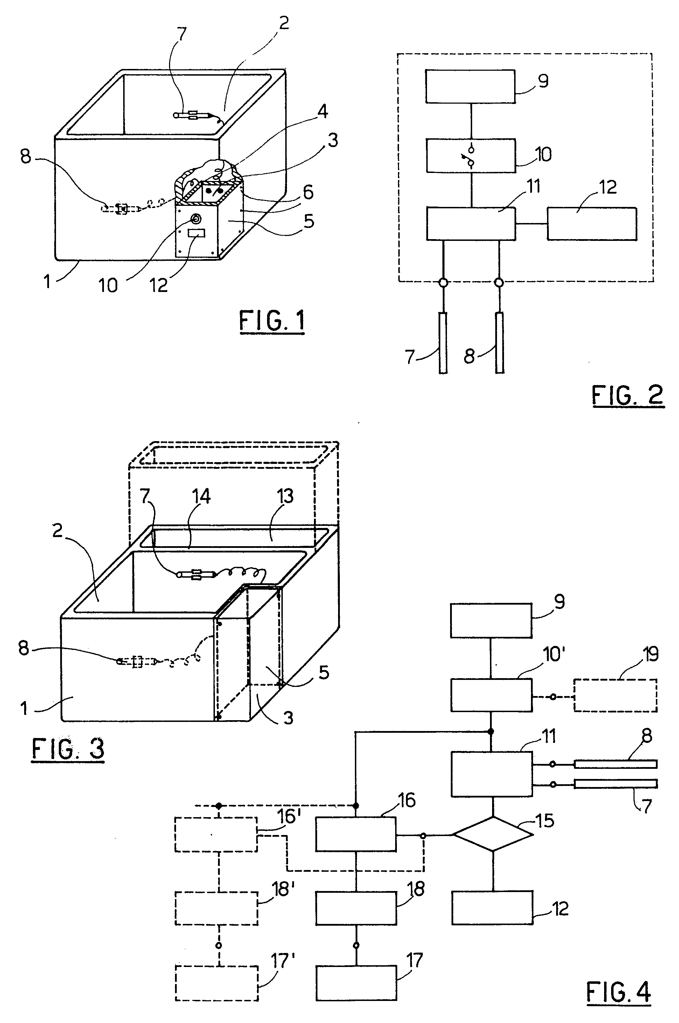

Shown in Fig. 1, is a flowerpot 1 shaped as a parallelepiped although it may take any other appropriate form, e.g. cylindrical, truncated cone, amphora, etc., made of any suitable material, e.g. heat hardened clay, earthnware, plastic, concrete, glass, metal, wood, eventually treated or coated, etc.. Essentially the pot 1 has a cavity 2 capable of containing a sufficient volume of a cultivation substrate material, e.g. humus, gravel, sand, vermiculite, perlite, etc., in which setting the roots of the plants to be cultivated in the pot.

The pot 1 is also provided of at least a cavity or receptacle 3, essentially separated from the internal cavity 2 by a wall 4 of the pot. This receptacle 3, notwithstanding being shown in a corner position in the pot of Fig. 1, may be formed in any other peripheral position of the pot. Access to the interior of the receptacle or cavity 3 from outside may take place by means of a suitable cover or panel 5 of painted metal, plastic or other suitable material, fixed in position by means of fasteners, e.g. screws 6 as shown in Fig. 1.

Two electrodes, respectively 7 and 8, in the form of two metallic rods, are fastened by means of suitable clips or equivalent means, to the internal wall of the pot and are spaced by a certain distance from one another. The electrodes are connected by an insulated wire, respectively, to two supply terminals electrically accessible from within said receptacle 3 of the pot. The receptacle 3 houses the various components of the control system.

According to a first embodiment of the invention, inside the receptable 3 there is an electronic apparatus shown schematically in a simplified form in the block diagram of Fig. 2. Essentially the electronic apparatus comprises a powering battery 9, means 10 for commanding a test which substantially connect momentarily the two electrodes 7 and 8 to the two poles of a biasing constant voltage source, e.g. the battery 9, respectively, through means 11 sensing the electrical current flowing through the circuit comprising the battery 9, said two electrodes 7 and 8 connected thereto and the cultivation substrate material separating the two electrodes 7 and 8 inside the pot. Said means 11 are capable of driving suitable signaling means 12 indicating the electrical conductivity condition of the bulk of the cultivation substrate material which is substantially proportional to the humidity degree thereof in function of the level of the sensed electrical current flowing through said circuit.

The test commanding means 10 may be a simple manually operated switch, e.g. a push button, a proximity switch, a sound operated switch, which may be conveniently mounted on the panel 5, as shown in Fig. 1. The electrical current sensing means 11 may be substantially an amplifier whose input senses a signal (i.e. a voltage) proportional to the current intensity flowing through the circuit comprising the electrodes 7 and 8 supplied by the battery 9 during the humidity ters. The output signal of the amplifier, by means of an appropriate threshold circuit (i.e. in function of the level reached by said output signal) determines the activation of a signaling device 12. The latter may be formed by two indicator lights of different color, e.g. green and red, one indicating a sufficient humidification degree of the cultivation substrate, the other indicating an insufficient degree of humidification and therefore signaling to the operator the necessity of adding water or fertilizer solution into the pot. The signaling means 12 may also utilize a LED (Light Emitting Diodes) display or a liquid crystals display, or acoustical or vocal simulator signaling devices.

According to such a first embodiment of the flowerpot of the invention, the operator may at any moment push a button 10 momentarily and verify, by means of the signaling means 12, the actual humidification conditions of the humus or more generally of the cultivation substrate contained in the pot.

According to another particularly preferred embodiment of the pot of the invention, as shown schematically in figures 3 and 4, the pot 1, besides being provided with a cavity or receptacle 3 accessible from outside through a closing panel 5, is also provided with at least an irrigation liquid reservoir substantially solid with the pot itself. Such a reservoir may be conveniently formed by creating inside the pot a cavity 13 essentially separated from the cavity 2 containing the cultivation substrate by means of a wall 14. A suitable cover (not shown in Fig. 3) may be placed over the upper opening of the reservoir 13.

In a pot of this type, inside the receptacle 3 there is an automatic control system comprising additional actuating means and whose simplified block diagram may be that shown in Fig. 4. The system comprises, as in the embodiment of Fig. 2, a supply battery 9, means for commanding a test procedure 10' which in this instance may be a programmable timed switch (e.g. a switch which is momentarily closed every 6 or 12 or 24 hours automatically by means of a timer), capable of determining substantially the electrical connection to the two poles of a biasing voltage source, e.g. the supply battery 9, of the two electrodes 7 and 8 fastened inside the pot and having a surface in contact with the cultivation substrate contained therein, and an electronic circuit 11 capable of generating an output signal indicative of the condition of sufficient or insufficient humidification of the cultivation substrate in function of the level of the current flowing in the battery-electrodes-substrate circuit. The electronic circuit 11 may be of the same type of that already described in relation to the diagram of Fig. 2. The output signal of the circuit 11 may be applied to the input of a logic circuit 15, which may be a simple threshold type circuit discriminating the level of the output signal of the circuit 11.

If the circuit 15 recognizes, by means of the signal applied to the input thereof, a condition of sufficient humidification of the substrate in the pot it may determine the momentary switching-on of an indicator lamp 12 or other equivalent signaling means as a confirmation of the effected check of the humidification condition. Conversely whenever the circuit 15 recognizes, by means of the signal applied to the input thereof, a condition of insufficient humidification of the substrate in the pot, it may determine, by means of a timed switch, the powering, by the supply battery 9, of a suitable transfer means for transferring a preset quantity of irrigation liquid 17 from the reservoir 13 to the cavity 2 of the pot filled with the humus or other cultivation substrate material.

The activation of the transfer means 17 may take place by means of a switch 16 which may be an electronic switch or a microrelay (a Reed relay), which starts an adjustable timer 18 which in turn determines the electrical powering of the transfer means 17 for a preset period of time which may vary from 0.5 to 3 or more minutes, by means of the battery 9. Therefore the quantity of irrigation liquid introduced in the pot every time the humidity sensor, formed by the circuit of said two electrodes 7 and 8 in the embodiment shown, verifies a condition of insufficient humidification, may be preset by adjusting the enabling timer 18.

The transfer means 17 may be a small electrical pump driven by the supply battery 9.

The automatic control system of the pot conditions may also be expanded, for example by providing the pot with more separate reservoirs, each containing a certain liquid, e.g. a first reservoir containing water and a second reservoir containing a fertilizer solution, and furnishing each reservoir with a liquid transfer electric pump driven by a respective timer which is started by an output signal of the logic circuit 15. Such an expansion of the automatic control system is shown in Fig. 4 by means of the indica tion by dash line of a second switch 16' which starts a second timer 18', which may essentially be adjusted autonomously in respect to the timer 18, and which activates a second pump 17' drawing liquid from a second reservoir of the pot. By suitably adjusting the two timers 18 and 18' a correct introduction in the pot of fertilizer and of humidification water in a desired proportion may be performed.

According to a modified embodiment, said liquid reservoir or reservoirs of the flowerpot may be formed in such a way as to result elevated in respect to the bulk of the cultivation substrate material contained in the pot. This alternative modified embodiment may be imagined by extending vertically upward the hollow space (reservoir) 13 formed along one side of the parallelepiped pot, as shown by the phantom figure drawn with dash lines in the pot depicted in Fig. 3. In this case gravity may be exploited for transferring liquid from such an elevated reservoir to the cultivation subs°rate by employing a solenoid valve set in an outflowing liquid conduit from the elevated reservoir to the interior of the pot, i.e. the liquid transfer means 17 (and possibly 17', 17'', etc.) may be a solenoid valve instead of an electrically driven pump.

The two electrodes 7 and 8 placed inside the pot are part of a conductivity cell type humidity sensor. I.e. for determining the degree of humidification of the humus contained inside the pot the resistance to the passage of an electrical current between the two electrodes biased by a constant the source, e.g. the supply battery 9, is measured by measuring the current actually flowing in the circuit. Of course the sensing electronic circuits will be provided with trimming means for adjusting the discriminating thresholds for the significant electric signals in function of the particular conditions such as the type of cultivation substrate material, the distance between the two electrodes 7 and 8, the area of the electrodes exposed to the contact with the substrate material, the stabilized biasing voltage applied to the electrodes, the materials forming the active surface of the electrodes, etc., taking of course in consideration the desired degree of humidity which must be maintained in the pot for the particular plant or plants cultivated therein.

According to a further embodiment of the pot of the invention, these trimming operations, as well as the setting of the timer or of the different timers utilized by the automatic control system, may be carried out automatically by utilizing a microprocessor for setting all the distinct trimmings of the automatic control system. Determined "instructions" may be supplied to the microprocessor incorporated in the electronic circuitry of the control system by means of a key board which may momentarily be connected to the microprocessor through a suitable connector. Such a particularly sophisticated embodiment of the pot of the invention is indicated in Fig. 4 by means of the phantom figure of the block 19, drawn with dash lines, which represents a key board for sending impulses (instructions) to a controlling microprocessor contained inside the block 10′ circuitry.

The electrodes 7 and 8 are preferably made with a non-passivatable material. Iron, copper, lead, graphite, magnesium, aluminum and alloys thereof are suitable materials for making the electrodes 7 and 8. More preferably through the electrodes 7 and 8, or at least the electrode destined to be connected to the positive pole of the source of the biasing voltage, may be made by an electrically conductive material having the surface exposed to the contact with the cultivation substrate material coated with a thin layer of a material belonging to the group composed by: silver, gold, platinum, iridium, ruthenium, rhodium, oxides or oxycompounds of at least a metal belonging to the group composed by ruthenium, iridium, platinum, lead, titanium and iron and mixtures thereof.

Electrodes coated with noble metals or relatively electrically conductive oxides or oxycompounds such as those indicated above have the advantage of being anodically insoluble and of maintaining a good reproducibility of their polarization and electrical contact with the cultivation substrate material.

As recalled before the pair of electrodes 7 and 8 are part of a humidity sensor. For the objectives of the present invention the humidity sensor may be of any type and shape and not necessarily formed by a pair of electrodes 7 and 8 as shown in the preferred embodiments. The only requisite of such a humidity sensor being that of producing an electrical signal indicative of the humidity degree of the cultivation substrate.

## Claims

1. A pot for cultivating plants comprising an open vessel capable of containing a certain volume of a cultivation substrate material characterized by comprising

a humidity sensor operatively in contact with said cultivation substrate material capable of providing an electrical signal indicative of the humidity degree of the bulk of the cultivation substrate material;

a receptacle in said vessel separated from the interior of the vessel containing the cultivation substrate and accessible through a closing panel; and, housed inside said receptacle,

a) a supply battery;

b) means for commanding the performance of a humidity test operatively capable of momentarily powering said humidity sensor by means of said battery;

c) means for signaling the degree of humidity of the bulk of the cultivation substrate material detected by said humidity sensor.

2. The pot according to claim 1, wherein said humidity sensor comprises two electrodes, spaced from each other, firmly set in contact with the bulk of the cultivation substrate material contained inside the pot.

3. The pot according to claim 1, wherein the means for commanding the execution of a test comprise a device belonging to the group composed of manual switches, proximity switches, sound operated switches and programmable timed switches.

4. The pot according to claim 1, wherein said signaling means comprise a device belonging to the group composed by LED displays, indicator lights, liquid crystals displays and sound generators.

5. The pot according to claim 1, wherein each of said two electrodes comprises a metal rod having a surface exposed to the contact with said cultivation substrate material and the rod is connected to an electrical supply terminal of a biasing constant voltage source housed inside said receptacle.

6. The pot according to claim 4, wherein at least the electrode which is connected to the positive pole of the electrical source has at least portion of the surface in contact with the cultivation substrate material formed by a material belonging to the group comprising iron, lead, magnesium, graphite, aluminum, copper and alloys thereof, silver, gold, platinum, iridium, ruthenium, rhodium, ruthenium oxide, platinum oxide, lead oxide, iron oxide, titanium oxide, iridium oxide and alloys and mixtures thereof.

7. The pot according to claim 1, wherein the pot is provided with at least an irrigation liquid reservoir and with electronic actuating logic means having at least an input and an output;

an electrical signal generated by said humidity sensor and indicative of the humidification degree of the cultivation substrate material is applied to the input of said electronic actuating logic means;

said electronic actuating logic means are operatively capable of discriminating an input signal indicative of an insufficient degree of humidification and generate an output electrical signal operatively capable of activating liquid transfer means momentarily to produce the transfer of a preset quantity of irrigation liquid from said reservoir to the cultivation substrate.

8. The pot according to claim 6, wherein said irrigation liquid reservoir of the pot has a level substantially elevated in respect to said cultivation substrate contained into the pot and said liquid transfer means activated by said electronic actuating logic means comprise a solenoid valve positioned in a discharge conduit leading from said reservoir to the interior of the pot containing the cultivation substrate material;

said electronic actuating logic means operatively determining the flow by gravity of a preset quantity of irrigation liquid from said reservoir to said substrate by opening said valve for a preset period of time.

9. The pot according to claim 7, wherein said irrigation liquid reservoir is an empty space present along one side of said pot and separated from the interior of the pot containing the cultivation substrate material by a separating wall;

the transfer of a preset quantity of irrigation liquid from inside said reservoir to the interior of the pot containing the cultivation substrate material being effected by electrically powering a pump for a preset period of time by means of said electronic actuating logic means.

0298926

FIG. 1

FIG. 2

FIG. 3

FIG. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | FR-A-2 341 860 (H.P. SMITH)<br>* Page 2, line 14 - page 3, line 25; figures 1,2,3 * | 1,2 | A 01 G 27/00 |
| A | DE-A-2 022 081 (SCHNEIDER)<br>* Page 7, last paragraph - page 13, paragraph 1; figures 1,2 * | 1,5,6,7 ,8 | |
| A | FR-A-2 438 418 (BIANCHI)<br>* Page 2, line 27 - page 3, line 37; figure 1 * | 1 | |
| A | US-A-3 626 286 (RAUCHWERGER)<br>* Column 1, line 64 - column 4, line 48; figures 1-7 * | 1,6,7,8 | |
| A | GB-A-2 052 106 (FENLOW IRRIGATION)<br>* Page 3, line 71 - page 5, line 86; figures 1,2 * | 1-7 | |
| A | FR-A-2 410 201 (ZITTI)<br>* Page 1, line 32 - page 4, line 7; figures 1-3 * | 1 | TECHNICAL FIELDS SEARCHED (Int. Cl.4)<br><br>A 01 G |

The present search report has been drawn up for all claims

| Place of search | Date of completion of the search | Examiner |
|---|---|---|
| THE HAGUE | 19-08-1988 | HERYGERS J.J. |